# EUROPEAN PATENT APPLICATION

(11) **EP 2 631 452 A2**
(43) Date of publication of application: **28.08.2013**
(21) Application number: 13155681.3
(22) Date of filing: 18.02.2013
(51) Int. Cl.: F02C 7/224

(54) **Gas turbine inlet system with solid-state heat pump**

(30) Priority: 21.02.2012 US 201213401350
(71) Applicant: General Electric Company, Schenectady, New York 12345 (US)
(72) Inventor: Ganti, Sanyaswara Rao, 560066 Bangalore (IN); Keny, Mayur Abhay, 560066 Bangalore, Karnataka (IN); Ramesh, Anantha, 560066 Bangalore, Karnataka (IN); Sundaram, Hariharan, 560066 Bangalore, Karnataka (IN); Nandagopal, Pugalenthi, 560066 Bangalore, Karnataka (IN)
(74) Representative: Cleary, Fidelma

(57) **Abstract**

A gas turbine inlet system (20) includes a first passage (22) that delivers inlet air to a compressor (12), a second passage (28) that delivers fuel to a combustor (14), and a heat pump (26) that transfers heat from the inlet air to the fuel by consuming electric power. The heat transfer causes the turbine inlet air temperature to drop and fuel temperature to increase with favorable effects on both turbine output and heat rate.

## Description

### BACKGROUND OF THE INVENTION

The invention relates to a gas turbine inlet system and, more particularly, to a gas turbine inlet system including a solid-state heat pump.

Gas turbine engines generally include a compressor for compressing an incoming air flow (gas turbine inlet air or GT inlet air). The air flow is mixed with fuel and ignited in the combustor for generating hot combustion gases. The combustion gases in turn flow to a turbine. The turbine extracts energy from the gases for driving a shaft. The shaft powers the compressor and generally another element such as an electrical generator.

At higher ambient temperatures, the output of a gas turbine can drop due to the lower density of compressor inlet air. Prior systems have performed inlet air conditioning with the help of evaporative coolers, which become less effective as the ambient temperature falls or humidity increases. Inlet chillers have also been used to cool the inlet air in water scarce regions but have a disadvantage of higher operation and maintenance costs. Traditionally, fuel heating is achieved with an external heat source or low grade heat from the bottoming cycle.

It would be desirable to provide a system that effects inlet air conditioning and reduces the power output lapse versus the ambient temperature. It would also be desirable to utilize the fuel stream as the sink to thereby improve the heat rate of the plant due to the fuel heating effect.

### BRIEF DESCRIPTION OF THE INVENTION

In an first aspect, the invention resides in a gas turbine inlet system for a gas turbine including a compressor that compresses gas turbine inlet air for combustion in a combustor that outputs products of combustion to drive a turbine. The inlet system includes a main inlet air passage that carries the gas turbine inlet air to the compressor, a heat pump, and a fuel passage that carries fuel to the combustor via the heat pump. A diverted inlet air passage is connected to the main inlet air passage and diverts a fraction of the gas turbine inlet air through the heat pump and back to the main inlet air passage. Heat from the gas turbine inlet air in the diverted inlet air passage is exchanged via the heat pump with the fuel in the fuel passage.

In another aspect, the invention resides in a gas turbine inlet system including a first passage that delivers inlet air to a compressor, a second passage that delivers fuel to a combustor, and a heat pump that transfers heat from the inlet air to the fuel by consuming electric power.

In still another aspect, the invention resides in a method of delivering air and fuel in a gas turbine including the steps of diverting gas turbine inlet air from a main inlet air passage to a heat pump; carrying fuel through the heat pump; transferring heat from the gas turbine inlet air to the fuel in the heat pump; returning cooler air to the main inlet air passage for delivery to a compressor; and delivering hotter fuel to a combustor.

In a further aspect, the invention resides in a gas turbine inlet system including a heat pump, an inlet air passage that carries the gas turbine inlet air to the compressor at least partially via the heat pump, a fuel passage that carries fuel to the combustor, and an exit air passage that carries compressor exit air to the combustor. Heat from the gas turbine inlet air in the inlet air passage is exchanged via the heat pump with one of the fuel in the fuel passage or the compressor exit air.

### BRIEF DESCRIPTION OF THE DRAWINGS

Embodiments of the present invention will now be described, by way of example only, with reference to the accompanying drawings in which:
FIG. 1 is a schematic diagram of a gas turbine including a gas turbine inlet system with an integrated solid-state heat pump;
FIG. 2 is a cross-sectional view showing the heat pump ducts; and
FIG. 3 is a schematic diagram of an alternative embodiment.

### DETAILED DESCRIPTION OF THE INVENTION

The gas turbine inlet system of the described embodiments utilizes a heat exchanger or solid-state heat pump such as a thermionic or thermoelectric device to transfer heat from a source (GT inlet air) to a sink (fuel stream) by consuming electric power. The heat transfer causes the GT inlet air temperature to drop and the fuel temperature to increase with favorable effects on both output and heat rate.

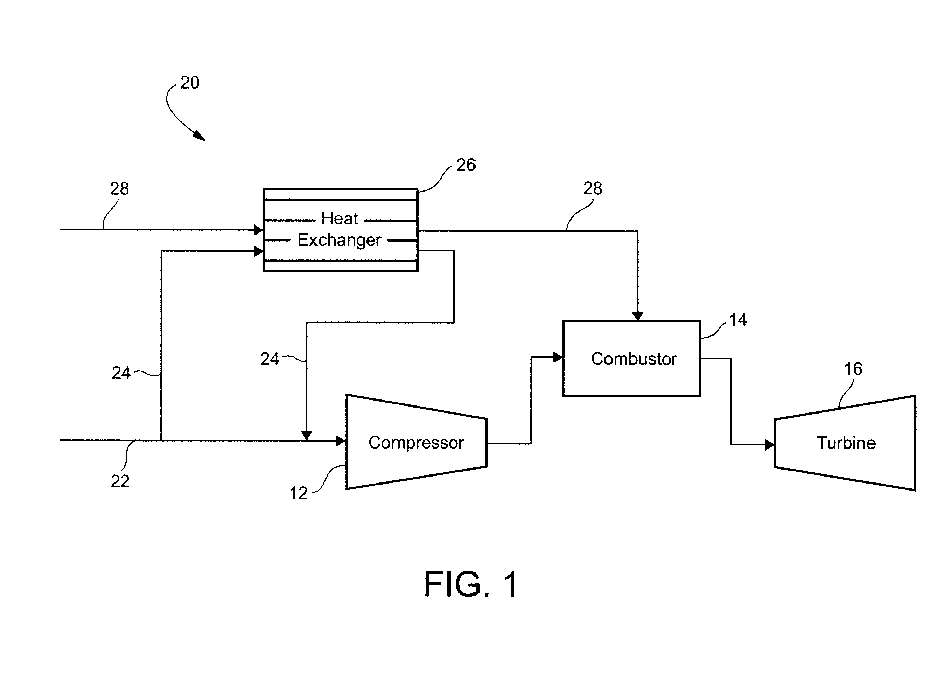

FIG. 1 is a block diagram of a gas turbine including the gas turbine inlet system of the described embodiments. The gas turbine includes a compressor 12 that compresses GT inlet air for combustion in a combustor 14, which outputs products of combustion to drive a turbine 16.

The inlet system 20 includes a main inlet air passage 22 that carries the GT inlet air to the compressor 12. A fraction of the GT air is diverted from the main inlet air passage 22 via a diverted inlet air passage 24 connected to the main inlet air passage 22. The fraction of diverted GT air is directed to a heat exchanger 26. An analysis has showed favorable results with 25% of air diverted, but any amount of air could be diverted. Preferably, the heat exchanger 26 is a solid-state heat pump, e.g., using thermionic or thermoelectric devices to transfer heat from a source to a heat sink.

A fuel passage 28 carries fuel to the combustor 14 via the heat pump 26. The heat pump 26 consumes electric power to transfer heat from the inlet air stream (source) to the fuel stream (heat sink).

Downstream of the heat pump 26, the relatively cooler GT inlet air returns to the main inlet air passage 22 via the downstream portion of the diverted inlet air passage 24. As shown in FIG. 1, the GT inlet air temperature (T_{ambient}) is cooler (e.g., less than T_{ambient}) downstream of the heat pump 26. The cooler air returns to the main inlet air passage 22 well before the compressor inlet for proper temperature distribution.

The relatively hot fuel is carried directly to the combustor 14. In an exemplary application, the fuel upstream of the heat exchanger is generally about 80°F, and the fuel downstream of the heat exchanger 26 is greater than 80°F. For gas turbine and steam turbine combined cycle operation, the temperature may be 365°F.

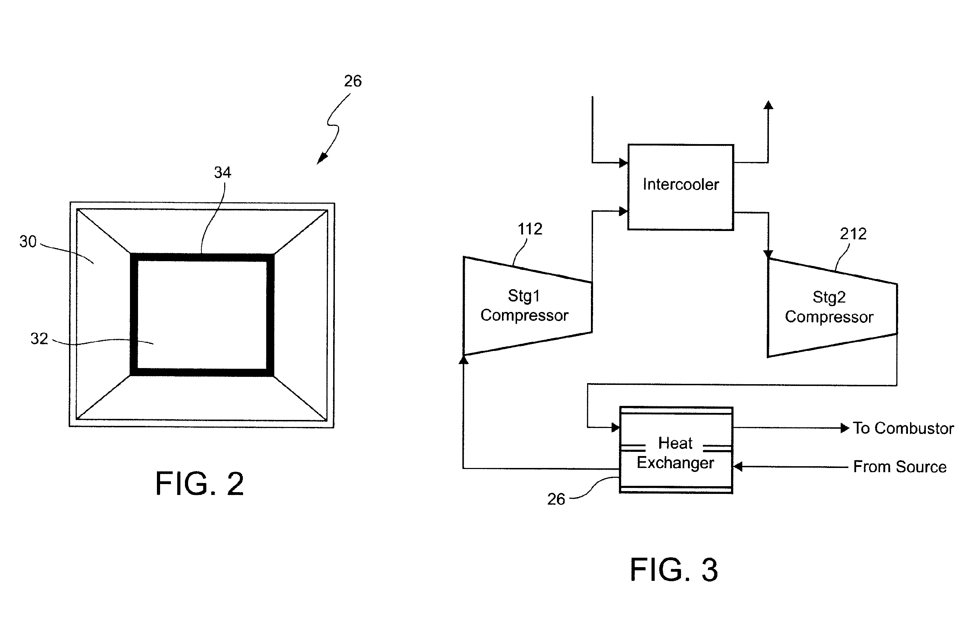

FIG. 2 is a cross-sectional view of the solid-state heat pump 26. The heat pump 26 includes an outer duct 30 and an inner duct 32. The outer and inner ducts 30, 32 may be concentric as shown. Additionally, the ducts 30, 32 may comprise a substantially square cross-section. The fuel passage 28 is coupled with the inner duct 32, and the diverted inlet air passage 24 is coupled with the outer duct 30. A plurality of thermionic or thermoelectric devices 34 may be affixed to an outer surface of the inner duct 32. The thermionic or thermoelectric devices are connected electrically in series and thermally in parallel. The thermionic or thermoelectric devices 34 consume electric power to transfer heat from the GT inlet air in the outer duct 30 to the fuel stream in the inner duct 32.

The decrease in GT inlet air temperature results in higher mass flow, which causes a corresponding increase in turbine output. The increase in fuel temperature provides a heat rate benefit. Due to the fast response of the system, the improvements in output and heat rate are nearly instantaneous. Since the thermionic/thermoelectric cooling effect is dependent on the electrical supply, the system can be easily controlled and integrated with the existing control systems, and dependency on external heat sources for fuel heating can be minimized. Additionally, the system is quiet and reliable as the heat pump operates silently and is essentially maintenance free. Still further, the increase in turbine output more than offsets the electrical energy needed to power the heat pump.

FIG. 3 is a schematic diagram of an alternative embodiment. In this embodiment, the heat exchanger 26 is interposed between compressor stages, for example, a first stage compressor 112 and a second stage compressor 212. Air entering the compressor can be cooled to improve compressor efficiency (i.e., enhance total plant output). With existing systems, this can be accomplished by intercoolers. In the embodiment shown in FIG. 3, the heat exchanger 26 cools the inlet air to the upstream compressor 112, and the rejected heat is used to heat the exit air from the downstream compressor 212. The heated exit air is delivered to the combustor, resulting in increasing the combustor inlet temperature.

With this structure, advantageously, cooling the inlet air to the upstream (e.g., stage 1) compressor 112 serves to increase compressor efficiency, and as a consequence, parasitic compressor power is reduced thereby improving the net plant output. Additionally, by heating the compressor exit air from the downstream compressor (e.g., stage 2 compressor), the heat rate of the gas turbine is increased due to the higher combustor inlet temperature.

While the invention has been described in connection with what is presently considered to be the most practical and preferred embodiments, it is to be understood that the invention is not to be limited to the disclosed embodiments, but on the contrary, is intended to cover various modifications and equivalent arrangements included within the spirit and scope of the appended claims. For example, the system can be operated intermittently to provide the power boost required in transient events like during under-frequency grid code compliance. Also, the duct design can be refined further for minimum pressure loss and maximum heat transfer. Still further, the heat pump can be used in reverse (by reversing the direction of electric current flow) to heat the inlet air for IBH (inlet bleed heat) applications. Though the cost of present devices for such applications is prohibitive, future improvements in device efficiencies might prove to be practical.

Various aspects and embodiments of the present invention are defined by the following numbered clauses:
1. A gas turbine inlet system comprising:
   a first passage that delivers inlet air to a compressor;
   a second passage that delivers fuel to a combustor; and
   a heat pump that transfers heat from the inlet air to the fuel by consuming electric power.
2. An inlet system according to clauses 1, further comprising a third passage that diverts a fraction of the inlet air from the first passage, through the heat pump, and back to the first passage.
3. An inlet system according to clause 2, wherein the heat pump is a solid-state heat pump that comprises one of a thermionic and a thermoelectric device.
4. An inlet system according to any of clauses 1 to 3, wherein the solid-state heat pump comprises an outer duct and a concentric inner duct, and wherein the second passage is coupled with the inner duct and the third passage is coupled with the outer duct.
5. An inlet system according to clause 4, wherein a plurality of thermionic or thermoelectric devices are affixed to an outer surface of the inner duct.
6. An inlet system according to clause 4 or 5, wherein the inner duct and the outer duct comprise a substantially square cross-section.
7. A gas turbine inlet system for a gas turbine including a compressor that compresses gas turbine inlet air for combustion in a combustor that outputs products of combustion to drive a turbine, the inlet system comprising:
   a heat pump;
   an inlet air passage that carries the gas turbine inlet air to the compressor at least partially via the heat pump;
   a fuel passage that carries fuel to the combustor; and
   an exit air passage that carries compressor exit air to the combustor,
   wherein heat from the gas turbine inlet air in the inlet air passage is exchange via the heat pump with one of the fuel in the fuel passage or the compressor exit air.
8. A gas turbine inlet system according to clause 7, wherein the compressor comprises at least an upstream compressor stage and a downstream compressor stage, wherein the inlet air passage carries the gas turbine inlet air to the upstream compressor stage via the heat pump, and wherein the exit air passage is connected between the downstream compressor stage to the combustor via the heat pump.

## Claims

1. A gas turbine inlet system (20) for a gas turbine including a compressor that compresses (12) gas turbine inlet air for combustion in a combustor (14) that outputs products of combustion to drive a turbine (16), the inlet system (20) comprising:
a main inlet air passage (22) that carries the gas turbine inlet air to the compressor (12);
a heat pump (26);
a fuel passage (28) that carries fuel to the combustor (14) via the heat pump (26); and
a diverted inlet air passage (24) connected to the main inlet air passage (22), the diverted air inlet passage (24) diverting a fraction of the gas turbine inlet air through the heat pump (26) and back to the main inlet air passage (22), wherein heat from the gas turbine inlet air in the diverted inlet air passage (24) is exchanged via the heat pump (26) with the fuel in the fuel passage (28).

2. An inlet system according to claim 1, wherein the heat pump (26) is a solid-state heat pump that comprises one of a thermionic and a thermoelectric device (34).

3. An inlet system according to claim 1 or 2, wherein the solid-state heat pump comprises an outer duct (30) and a concentric inner duct (32), and wherein the fuel passage (28) is coupled with the inner duct (32) and the diverted inlet air passage (24) is coupled with the outer duct (30).

4. An inlet system according to claim 3, when dependent on claim 2, wherein a plurality of thermionic or thermoelectric devices (34) are affixed to an outer surface of the inner duct (32).

5. An inlet system according to claim 3 or 4, wherein the inner duct (32) and the outer duct (30) comprise a substantially square cross-section.

6. An inlet system according to any preceding claim, wherein the solid state heat pump (26) is connected with an electric power source.

7. A gas turbine including the inlet system (20) of any of claim 1 to 6.

8. A method of delivering air and fuel in a gas turbine, the method comprising:
diverting gas turbine inlet air from a main inlet air passage (22) to a heat pump (26);
carrying fuel through the heat pump (26);
transferring heat from the gas turbine inlet air to the fuel in the heat pump (26);
returning cooler air to the main inlet air passage (22) for delivery to a compressor (12); and
delivering hotter fuel to a combustor (14).
